# EUROPEAN PATENT APPLICATION

(11) **EP 1 870 828 A1**
(43) Date of publication of application: **26.12.2007**
(21) Application number: 06115927.3
(22) Date of filing: 22.06.2006
(51) Int. Cl.: G06F 21/00

(54) **Two-Factor Content Protection**

(71) Applicant: Research In Motion Limited, Waterloo, Ontario N2L 3W8 (CA)
(72) Inventor: Brown, Michael K, Kitchener Ontario N2M 2Z2 (CA); Adams, Neil, Waterloo Ontario N2K 4E4 (CA); Brown, Michael S, Waterloo Ontario N2K 4B1 (CA)
(74) Representative: Bewley, Ewan Stuart

(57) **Abstract**

A system for providing two-factor content protection includes a first device (404) that is enabled with content protection, and a second device (401) that is used to authenticate users of the first device. The first device (404) uses the public key (K_{PUBLIC}) of a public/private key pair belonging to the second device (401) to encrypt its content protection key.

## Description

### BACKGROUND

When a computer is connected to a network such as a Local Area Network (LAN), or the internet, the computer's hard drive can be exposed to attacks by other network users seeking to obtain sensitive information from the hard drive without the owner's permission. Often, sensitive personal information such as social security numbers, or proprietary company information is stored on the computer's hard drive. For this type of sensitive information, it is desirable to provide protection from access by unauthorized users. For some computers, sensitive information can be stored using content protection, for example, by encrypting it with a key generated from a password which the user of the device enters via a user input interface. The password may be used to generate an Advanced Encryption Standard (AES) key for the encryption algorithm. A common problem with this approach, however, is that if the password chosen is easily guessed, or is obtained by an unauthorized user, the AES key can be copied, and the protected content can be decrypted by an unauthorized user.

Another layer of security can be provided by using a device to authenticate the identity of the user when the computer is booted up. An example of a popular method for authenticating a user is a smart card and smart card reader. A smart card resembles a credit card in size and shape, but may also contain a microprocessor and memory. The smart card owner's identity and other personal information are stored in memory on the smart card. Smart cards can be used with a smart card reader that communicates with a computer to authenticate a user. In this way, only authorized users can completely boot up or unlock the computer by inserting their smart card into the smart card reader for authorization.

The smart card may also contain security features that protect the personal information stored on it. The smart card may include an encryption/decryption engine, and may have a public/private key pair which is used with an asymmetric encryption algorithm to protect the owner's stored personal information. For this type of smart card, a form of two- factor authentication may be used, where the user who seeks access to the computer is required to enter a password as well as to be in possession of an authorized smart card. The smart card uses the password to determine whether the user is authorized to have access to the personal information stored on the smart card, which will in turn be used to access the computer.

While these measures enhance the security of a user's hard drive contents, it is still possible that an unauthorized user may gain access to sensitive information after the authorized user has booted up the computer with a smart card, if the unauthorized user is able to defeat the encryption of the protected contents of the hard drive.

The problem of providing content protection also arises when sensitive information is stored on other devices with memory, for example mobile communication devices. Mobile communication devices may also be used with an authentication device such as a smart card reader and smart card.

### SUMMARY

When using an authentication device with a computer, content protection for the computer's hard drive may be enhanced by using the authentication device's public/private keys to encrypt and decrypt the content protection key. One example of such an authentication device is a smart card reader and smart card combination. Once content protection is enabled, a content protection key may be generated using random data (e.g. random numbers and/or strings of random bits), providing a better key than would be obtained by starting from a more predictable and discoverable user-entered password. For long-term storage in the computer's memory (e.g., longer than a single session), the content protection key may be encrypted using the public key of the smart card, to further protect against unauthorized use. Once the user has entered a password to unlock the computer, the password may also be used to gain access to the smart card's private key for decryption of the content protection key. While the computer remains unlocked, a decrypted content protection key may be stored transparently in the computer's Random Access Memory (RAM), and portions of the hard drive's protected contents may be decrypted on-the-fly in response to requests by the user. When the computer is locked again, the decrypted content protection key may be destroyed. In this way, two-factor authentication is provided not only for access to the computer, but also for the content protection of sensitive data on the hard drive. To gain access to the protected data, the user must (i) be in possession of the smart card, and (ii) know the password to access the smart card's private key.

In one aspect, a system for providing two-factor content protection includes a first device that is enabled with content protection, and a second device that is used to authenticate users of the first device. The first device uses the public key of a public/private key pair belonging to the second device to encrypt its content protection key.

### BRIEF DESCRIPTION OF THE DRAWINGS

Embodiments are illustrated by way of example and not limitation in the figures of the accompanying drawings, in which like reference numerals indicate corresponding, analogous or similar elements, and in which:

Figure 1 is a schematic diagram of an exemplary system with an authentication device that includes a smart card reader and smart card, according to some embodiments of the invention;

Figure 2 is a flowchart of an exemplary method for protecting digital contents using two-factor content protection, according to some embodiments of the invention;

Figure 3 is a flowchart of an exemplary method for using a computer including decryption of protected digital contents when two-factor content protection is enabled, according to some embodiments of the invention; and

Figure 4 is a block diagram of an exemplary system involving a smart card reader and smart card, according to some embodiments of the invention.

It will be appreciated that for simplicity and clarity of illustration, elements shown in the figures have not necessarily been drawn to scale. For example, the dimensions of some of the elements may be exaggerated relative to other elements for clarity.

### DETAILED DESCRIPTION

In the following detailed description, numerous specific details are set forth in order to provide a thorough understanding of embodiments. However it will be understood by those of ordinary skill in the art that the embodiments may be practiced without these specific details. In other instances, well-known methods, procedures, components and circuits have not been described in detail so as not to obscure the embodiments.

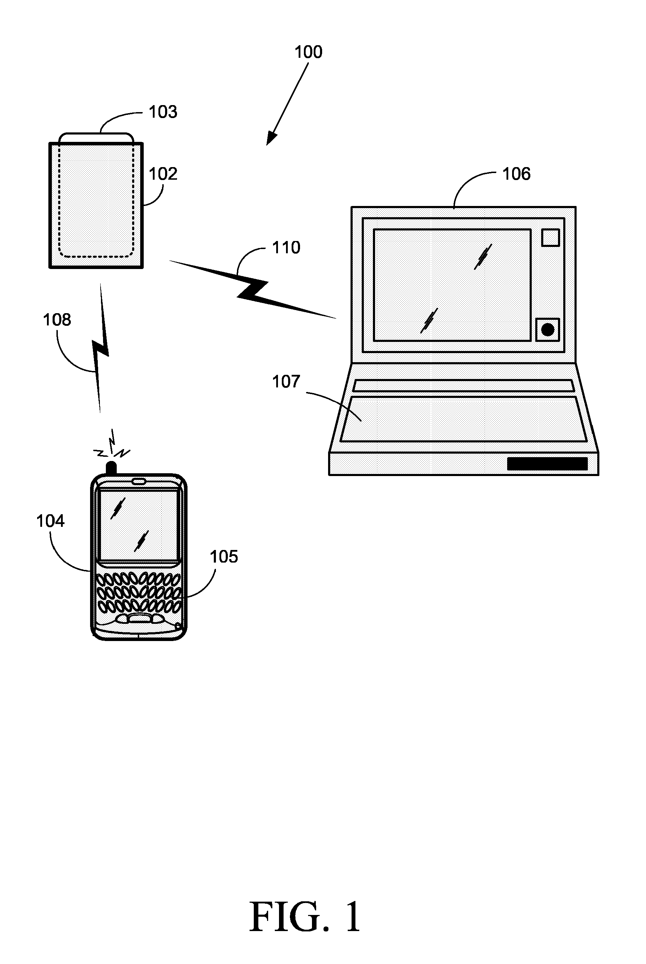

Figure 1 is a schematic diagram of an exemplary system which includes an authentication device, according to some embodiments of the invention. A system 100 includes a personal computer 106, a smart card reader 102, and a mobile device 104. A smart card 103 is shown inserted into smart card reader 102. Mobile device 104 includes a user input interface 105, and personal computer 106 includes a user input interface 107.

Content protection may be desired for personal computer 106 and/or mobile device 104. Personal computer 106 and smart card reader 102 may communicate either by a direct interface (not shown), or by a wireless communication link 110. Mobile device 104 and smart card reader 102 may communicate either by a direct interface (not shown), or by a wireless communication link 108. In this description and the claims, a wireless communication link may include one or more wired portions and/or one or more optical portions. As shown in Figure 1, communication links 108 and 110 are wireless communication links, for example Bluetooth® communication links, ZigBee^{™} communication links, radio frequency identification (RFID) communication links, ultra wideband (UWB) communication links, IEEE 802.11 communication links and any other suitable type of wireless communication link.

Smart cards are devices that are compatible with personal authentication protocols, as defined by the ISO7816 standard and its derivatives, published by the International Organization for Standardization. A smart card may have a form factor of a credit card and may include a semiconductor device. The semiconductor device may include a memory that can be programmed with a secret key and with an authentication certificate, and may include a decryption engine, e.g., a processor and/or dedicated decryption logic. A smart card may include a connector for powering the semiconductor device and performing serial communication with an external device. Alternatively, other types of authentication devices may be used, for example, Universal Serial Bus (USB) authentication tokens.

A non-exhaustive list of examples for mobile device 104 includes any of the following:
a) wireless human interface devices, for example, keyboards, mice, remote controllers, digital pens and the like;
b) wireless audio devices, for example, headsets, speakers, microphones, cordless telephones, handsets, stereo headsets and the like;
c) wireless computerized devices, for example, notebook computers, laptop computers, desktop personal computers, personal digital assistants (PDAs), handheld computers, cellular telephones, MP3 players, printers, facsimile machines, and the like; and
d) wireless communication adapters, for example, universal serial bus (USB) adapters, personal computer memory card international association (PCMCIA) cards, compact flash (CF) cards, mini peripheral component interconnect (PCI) cards, access points, and the like.

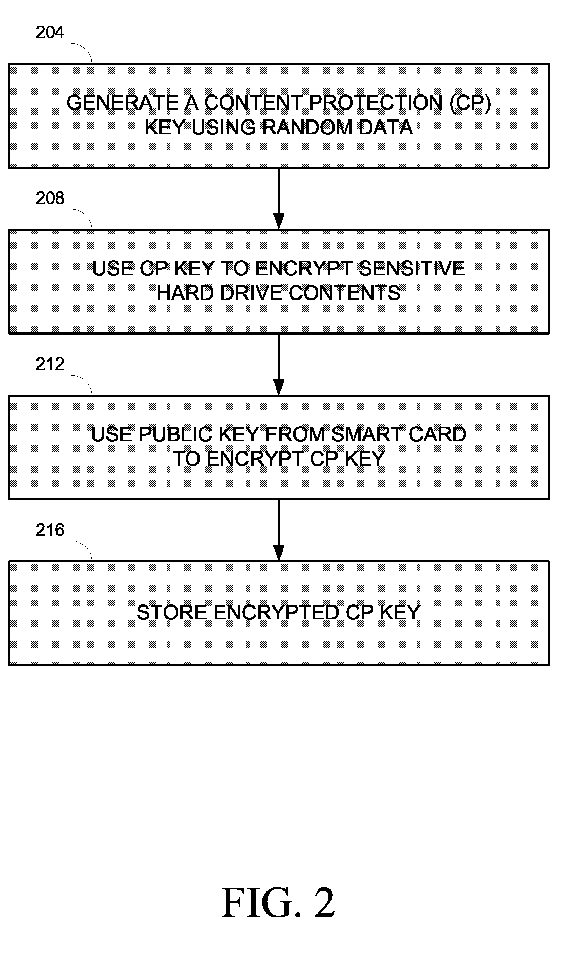

Figure 2 is a flowchart of an exemplary method for protecting digital contents using two-factor content protection, according to some embodiments of the invention. At 204, personal computer 106 generates a content protection (CP) key using random data. This key may be 256 bits in length, and may be compatible with AES encryption. At 208, personal computer 106 uses the CP key to encrypt all or portions of the contents of its hard drive. At 212, the public key of smart card 103 is used to encrypt the CP key. At 216, personal computer 106 stores the encrypted CP key. For example, the encrypted CP key may be stored on the computer's hard drive in a predefined location. In this flowchart, mobile device 104, or any other computing device that is enabled with content protection capability and can communicate with smart card reader 102, could take the place of personal computer 106. In that case, the CP key is used by mobile device 104 or the other computing device to encrypt all or portions of the contents of its non-volatile memory. A non-exhaustive list of examples for the non-volatile memory includes flash read only memory (ROM) - both NOR type and NAND type, erasable programmable ROM (EPROM), electrically erasable programmable ROM (EEPROM), non-volatile random-access memory (NOVRAM), and the like. Similarly, at 216, the mobile device 104 stores the encrypted CP key. For example, the encrypted CP key may be stored in the mobile device's non-volatile memory in a predefined location.

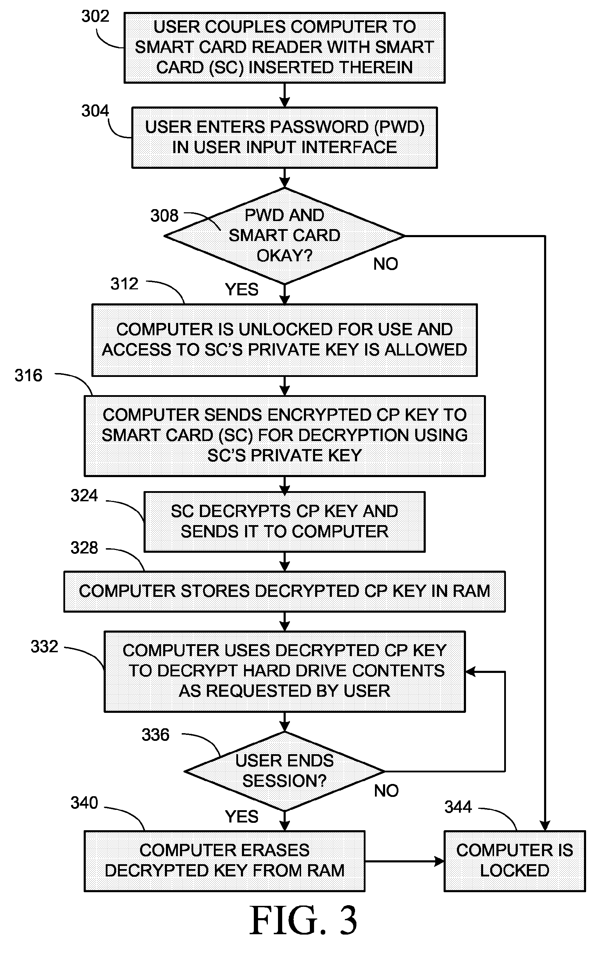

Figure 3 is a flowchart of an exemplary method for using a computer, which includes decryption of protected digital contents when two-factor content protection is enabled, according to some embodiments of the invention. At 302, the user inserts smart card 103 into smart card reader 102 if not already inserted therein, and couples smart card reader 102 to personal computer 106 if not already coupled thereto. Coupling the smart card reader to the personal computer may include establishing a secure communication layer on top of the physical link between the smart card reader and the personal computer, to ensure the confidentiality and authenticity of any data they exchange subsequently. This brings up a password dialog on personal computer 106. At 304, the user enters a password in user input interface 107. Alternatively, the user enters the password in a user input interface associated with smart card reader 102, or an additional peripheral unit that communicates with either personal computer 106 or smart card reader 102. At 308, personal computer 106 communicates with smart card reader 102, to determine whether smart card 103 belongs to an authorized user of personal computer 106. If smart card 103 belongs to an authorized user, and the user-entered password is correct, at 312, personal computer 106 is unlocked for use and access to smart card's 103 private key is allowed. If either of these conditions is not met, the computer remains locked and access to smart card's 103 private key is not allowed. In this exemplary method, the password to access the private key is the same as the password required to obtain access to personal computer 106. In alternative embodiments, two distinct passwords could be used, although at a cost of increasing the amount of user input required. At 316, personal computer 106 sends the encrypted CP key to smart card 103 for decryption using smart card's 103 private key. At 324, smart card 103 uses its private key to decrypt the encrypted CP key sent by personal computer 106, and sends the decrypted CP key back to personal computer 106. At 328, personal computer 106 stores the decrypted CP key in RAM. At 332, the decrypted CP key is used to decrypt portions of the protected data as requested by the user. At 336, if the user ends the computer session, the decrypted CP key is erased from RAM at 340, and personal computer 106 is locked at 344. In figure 3, personal computer 106 may be replaced by mobile device 104, or any other device that is enabled with content protection and that communicates with an authentication device.

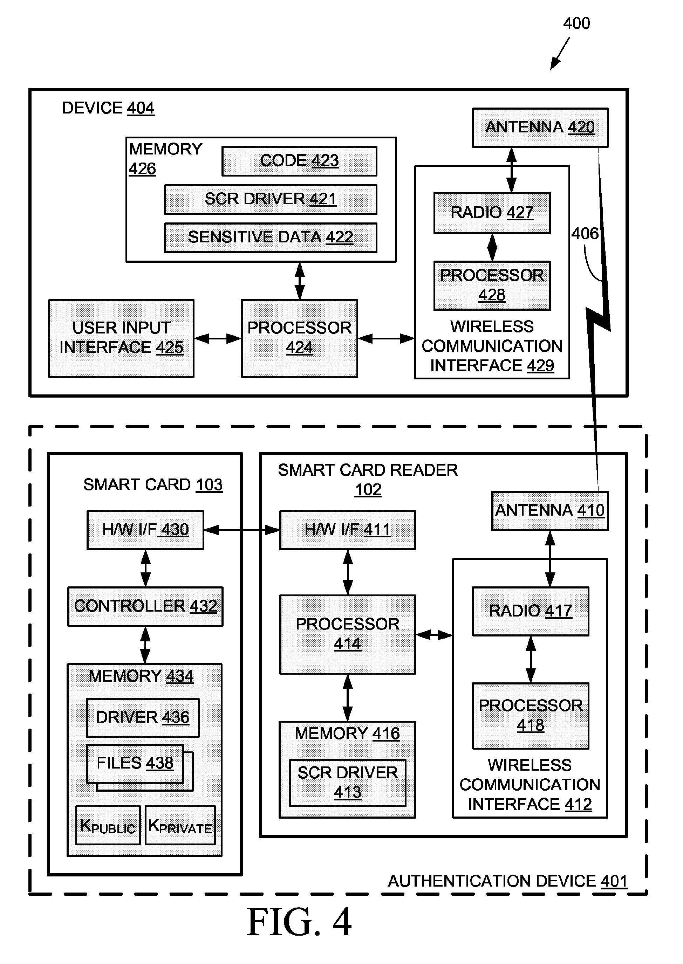

Figure 4 is a block diagram of an exemplary system 400, according to some embodiments of the invention. System 400 includes a device 404 and an authentication device 401 that includes smart card reader 102 and smart card 103. Device 404 and smart card reader 102 are able to communicate over a wireless communication link 406, and smart card 103 is in direct communication with smart card reader 102. Alternatively, device 404 and smart card reader 102 could communicate over a direct link, such as a serial connection. Personal computer 106 and mobile device 104 are examples of device 404.

Device 404 includes an antenna 420, a wireless communication interface 429, a processor 424 coupled to wireless communication interface 429, a memory 426 coupled to processor 424, and a user input interface 425 coupled to processor 424. Memory 426 may be fixed in or removable from device 404. Memory 426 stores executable code 421 which, when executed by processor 424, functions as a smart card reader driver. Memory 426 also stores executable code 423 which, when executed by processor 424, functions to run a content protection application. Memory 426 stores data 422 corresponding to sensitive information. Processor 424 and memory 426 may be part of the same integrated circuit or in separate integrated circuits. Wireless communication interface 429 includes a radio 427 coupled to antenna 420, and a processor 428 coupled to radio 427. Wireless communication interface 429 and processor 424 may be part of the same integrated circuit or in separate integrated circuits.

Similarly, smart card reader 102 includes an antenna 410, a wireless communication interface 412, a processor 414 coupled to wireless communication interface 412, a hardware interface 411, and a memory 416 coupled to processor 414. For example, hardware interface 411 is a connector that mates to a corresponding connector with contact pins on smart card 103. Memory 416 may be fixed in or removable from smart card reader 102. Memory 416 may be embedded or partially embedded in processor 414. Memory 416 stores executable code 413 that functions as a smart card reader driver when executed by processor 414. Processor 414 and memory 416 may be part of the same integrated circuit or in separate integrated circuits. Wireless communication interface 412 comprises a radio 417 coupled to antenna 410, and a processor 418 coupled to radio 417. Wireless communication interface 412 and processor 414 may be part of the same integrated circuit or in separate integrated circuits.

A non-exhaustive list of examples for antennae 410 and 420 includes dipole antennae, monopole antennae, multilayer ceramic antennae, planar inverted-F antennae, loop antennae, shot antennae, dual antennae, omnidirectional antennae and any other suitable antennae.

A non-exhaustive list of examples of communication protocols with which communication interfaces 412 and 429 may be compatible includes Bluetooth®, ZigBee^{™}, radio frequency identification (RFID), ultra wideband (UWB), IEEE 802.11, and proprietary communication protocols.

A non-exhaustive list of examples for processors 414, 418, 424 and 428 includes a central processing unit (CPU), a digital signal processor (DSP), a reduced instruction set computer (RISC), a complex instruction set computer (CISC) and the like. Furthermore, processors 414, 418, 424 and 428 may be part of application specific integrated circuits (ASICs) or may be a part of application specific standard products (ASSPs).

A non-exhaustive list of examples for memories 416 and 426 includes any combination of the following:
a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;
b) optical devices, such as compact disk read only memory (CD ROM), and the like; and
c) magnetic devices, such as a hard disk, a floppy disk, a magnetic tape, and the like.

Smart card 103 includes a hardware interface 430, a controller 432 coupled to hardware interface 430, and a memory 434 coupled to controller 432. Memory 434 stores executable code 436 which functions as a driver when executed by controller 432. Memory 434 also stores files 438 with stored personal information about the smart card's owner. Memory 434 also stores a public/private key pair (K_{PUBLIC}, K_{PRIVATE}) of smart card 103.

Device 404, smart card reader 102 and smart card 103 include additional components which are not shown in Figure 4 and which, for clarity, are not described herein.

Memory 426 may store executable code 423 which, when executed by processor 424, runs a computer application that provides content protection for sensitive data 422. The content protection application may generate a content protection key using random data. The content protection application may then use this content protection key to encrypt sensitive data 422. The content protection application may use the public key belonging to smart card 103 to encrypt the content protection key. The encrypted content protection key may then be stored long-term in memory 426.

Subsequently, when a user desires access to device 404, and device 404 is in a locked state, smart card 103, and a password entered into user input interface 425 may be used in combination with each other to validate the user's identity, according to the flowchart shown in Figure 3. Validating a user's identity using two distinct pieces of information is known as two-factor authentication. Protecting sensitive data using two-factor authentication is a form of two-factor content protection.

Computer-executable instructions for performing two-factor content protection according to the above-described method may be stored on a form of computer readable media. Computer readable media includes volatile and nonvolatile, removable and non-removable media implemented in any method or technology for storage of information such as computer readable instructions, data structures, program modules or other data. Computer readable media includes, but is not limited to, random access memory (RAM), read-only memory (ROM), electrically erasable programmable ROM (EEPROM), flash memory or other memory technology, compact disk ROM (CD-ROM), digital versatile disks (DVD) or other optical storage, magnetic cassettes, magnetic tape, magnetic disk storage or other magnetic storage devices, or any other medium which can be used to store the desired instructions and which can be accessed by device 404, including by internet or other computer network forms of access.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method for protecting content stored in a first device (404), the method comprising:
encrypting a content protection key belonging to the first device (404) using a public key (K_{PUBLIC}) of a public/private key pair belonging to a second, different, device (401), wherein the second device is an authentication device (401) that is used to limit use of the first device (404) solely to authorized users.

2. The method of claim 1, further comprising:
generating the content protection key using random data (204).

3. The method of claim 1 or 2, further comprising:
storing the encrypted content protection key in a memory (426) belonging to the first device (404).

4. The method of any one of claims 1 to 3, further comprising:
sending the encrypted content protection key to the second device (401) for decryption by the second device (401) using the private key (K_{PRIVATE}) of the pair.

5. The method of claim 4, wherein the second device (401) requires a password for use of the private key (K_{PRIVATE}), and sending the encrypted content protection key to the second device (401) for decryption comprises providing the password to the second device (401).

6. The method of claim 4 or claim 5, wherein sending the encrypted content protection key to the second device (401) occurs via a wireless communication link.

7. The method of any one of claims 4 to 6, further comprising:
receiving the decrypted content protection key from the second device (401).

8. The method of claim 7, further comprising:
temporarily storing the decrypted content protection key transparently in random access memory or flash memory of the first device (404).

9. A computer-readable medium having computer-executable instructions for performing the method of any one of claims 1 to 8.

10. A first device (404) enabled with content protection, comprising:
a memory (426);
a processor coupled to the memory (424); and
a communication interface (429) coupled to the processor (424) through which the first device (404) is able to communicate with a second device (401) that has a public/private key pair and that is used to authenticate users of the first device (404),
wherein the memory (426) is able to store executable code means (423), which, when executed by the processor (424), is arranged to generate a content protection key and to encrypt the content protection key using the public key of the second device (401).

11. The first device (404) of claim 10, wherein the executable code means (423), when executed by the processor (424), is arranged to generate the content protection key using random data.

12. The first device (404) of claim 10 or 11, wherein the executable code means (423), when executed by the processor (424), is arranged to send the encrypted content protection key to the second device (401) for decryption using the private key of the second device (401).

13. The first device (404) of claim 12, further comprising:
a user input interface (425) for entering a password to use the private key.

14. A system for providing content protection, comprising:
a first device (404) with content protection capability, wherein the content protection capability, when enabled by a user, is arranged to generate a content protection key used to protect data in the first device (404); and
a second device (401) with a public/private key pair, wherein the public/private key pair is used to encrypt and decrypt the content protection key in order to provide two-factor content protection.
